# EUROPÄISCHE PATENTANMELDUNG

(11) **EP 1 040 889 A2**
(43) Veröffentlichungstag der Anmeldung: **04.10.2000**
(21) Anmeldenummer: 99120399.3
(22) Anmeldetag: 13.10.1999
(51) Int. Cl.: B23D 45/14, B23D 45/10

(54) **Gehrungssägeeinrichtung mit simultanverstellbaren Sägeblättern**

(30) Priorität: 10.12.1998 DE 29822069 U
(71) Anmelder: RAPID MASCHINENBAU GmbH, 72131 Ofterdingen (DE)
(72) Erfinder: Letzgus, Gottfried, 72108 Rottenburg-Dettingen (DE)
(74) Vertreter: Wunderlich, Rainer, Dipl.-Ing.

(57) **Zusammenfassung**

Sägeeinrichtung zum Ablängen eines in einer Bearbeitungsvorrichtung (1) gehalterten, in einer Längsrichtung (11) langgestreckten Werkstücks (10), mit mindestens zwei Sägeaggregaten (9a,9b), welche entlang der Längsrichtung (11) voneinander beabstandet anordenbar und zum Durchsägen des Werkstücks (10) in einer ersten und in einer zweiten Schneidrichtung (12a,12b) quer zur Längsrichtung (11) ausgebildet sowie zur Einstellung der Schneidrichtungen (12a,12b) um Drehpunkte (13a,13b) zumindest teilweise verschwenkbar ausgebildet sind, wobei eine gemeinsame Verstelleinrichtung (30) vorgesehen ist zum simultanen Verstellen der Schneidrichtungen (12a,12b) der Sägeaggregate (9a,9b), daß die Verstelleinrichtung (30) einen Schlitten (22) aufweist, welcher in einem Zwischenbereich (31) zwischen den Sägeaggregate (9a,9b) in Querrichtung (6) zur Längsrichtung (11) verstellbar angeordnet ist, daß ein erstes und ein zweites Verbindungselement (14a,14b) vorgesehen sind, deren erste Enden (15a,15b) jeweils am Schlitten (22) drehbar oder gelenkig gelagert angeordnet sind und deren zweite Enden (16a,16b) jeweils mit einem Sägeaggregat (9a,9b) zum jeweiligen Drehpunkt (13a,13b) beabstandet verbunden sind, und daß bei Verstellung des Schlittens (22) in Querrichtung (6) die Sägeaggregate (9a,9b) durch Ankopplung über die Verbindungselemente (14a,14b) und die Drehpunkte (13a,13b) in ihren Schneidrichtungen (12a,12b) simultan und kontinuierlich verstellbar sind.

## Beschreibung

Die Erfindung betrifft eine Sägeeinrichtung zum Ablängen eines Werkstücks gemäß dem Oberbegriff des Anspruchs 1.

Bei vielen industriellen Produktionsprozessen werden die herzustellenden Produkte aus vorproduzierten Werkstücken oder Halbzeugen endgefertigt.
Oft werden die Halbzeuge in Massenproduktionsprozessen als Stangen- oder Rollenware bereitgestellt. Zur Verwendung der Halbzeuge müssen diese bearbeitet und insbesondere entsprechend der vorgegebenen Dimensionierung durch Zerschneiden oder Zersägen abgelängt werden.

Bei der Zusammensetzung von Produkten aus Profilleisten werden die vorgefertigten Profilleisten einer Rolle oder einem Stangenelement entnommen und in Gänze einer Bearbeitungs- und/oder Sägevorrichtung zugeführt. Beim Zersägen des vorgefertigten Profils wird auch gleichzeitig die entsprechende Gehrung angebracht, d.h. also ein Schnitt unter einem von 90° gegenüber der Profillängsrichtung abweichenden Winkel.

Um z.B. bei der Produktion von Tür- oder Fensterrahmen oder dergleichen im Maschinenpark eine besonders hohe Produktivität zu erzielen, ist es wesentlich, die entsprechenden Taktzeiten der bearbeitenden Maschinen zu verringern.

Dies kann zum einen dadurch erreicht werden, daß der Vorrat an Halbzeugen, z.B. unzerteilte Profilstangen, der Sägevorrichtung mit besonders hoher Geschwindigkeit zugeführt werden. Andererseits können auch entsprechende Sägeeinheiten mit besonders hoher Tourenzahl verwendet werden, so daß die Geschwindigkeit des Durchtrennens des Halbzeugs erhöht wird.

Bekannte Bearbeitungs- und/oder Sägevorrichtungen für Stangenprofile oder Werkstücke bestehen in ihrem wesentlichen Element aus einem Spanntisch, auf welchem das Werkstück mittels eines Spannstücks gegen eine Anlageeinrichtung mit Anlagekante eingespannt wird. Nach dem Zubringen des zu bearbeitenden Werkstückes und dem Einspannen und Haltern auf dem Spanntisch mittels des Spannstücks wird eine Bearbeitungs- und/oder Sägeeinrichtung an entsprechender Stelle am Werkstück angesetzt.

Zur weiteren Erhöhung der Verarbeitungs- und Bearbeitungsgeschwindigkeit werden bei Sägeeinrichtungen bekannter Bearbeitungsvorrichtungen für Stangenprofile oder Werkstücke mindestens zwei Sägeaggregate verwendet, welche entlang der Längsrichtung, in welcher das zu bearbeitende, langgestreckte Werkstück in der Bearbeitungsvorrichtung gehaltert wird, voneinander beabstandet anordenbar und zum Durchsägen des Werkstücks in einer ersten und in einer zweiten Schneidrichtung quer zur Längsrichtung sowie zur Einstellung der Schneidrichtung um Drehpunkte zumindest teilweise verschwenkbar ausgebildet sind.

Zur Einstellung der Schneidrichtungen der zwei Sägeaggregate sind in der Regel Verstelleinrichtungen vorgesehen, mit welchen die Schnittebene und damit die Schneidrichtung der Sägeaggregate relativ zur Längsrichtung des Werkstücks zwiverschiedenen und diskreten Gehrungswinkeln eingestellt werden können.

Verstelleinrichtungen für Sägeaggregate bekannter Sägeeinrichtungen verwenden für die Einstellung diskreter Schneidrichtungen entsprechende mechanische Anschläge oder Mehrstellungszylinder. Problematisch bei diesen bekannten Sägeeinrichtungen ist dabei, daß aufgrund der Mehrzahl der vorhandenen Sägeaggregate und ferner aufgrund der Notwendigkeit hoher Einstellgeschwindigkeiten bei gleichzeitiger Präzision ein übermäßiger mechanischer Verschleiß der Komponenten der Verstelleinrichtungen und die damit einhergehenden Toleranzen beim Einstellen der Schneidrichtungen nicht hingenommen werden können.

Der Erfindung liegt die **Aufgabe** zugrunde, eine Sägeeinrichtung zum Ablängen in einer Bearbeitungsvorrichtung gehalterter Werkstücke bereitzustellen, bei welcher eine Mehrzahl von Sägeaggregaten mit einem Minimum an mechanischem Aufwand besonders verschleißfrei und gleichwohl hochpräzise bezüglich ihrer Schneidrichtungen stufenlos einstellbar ist.

Die Aufgabe wird erfindungsgemäß bei einer gattungsgemäßen Sägeeinrichtung mit den kennzeichnenden Merkmalen des Anspruchs 1 gelöst. Vorteilhafte Weiterbildungen der erfindungsgemäßen Sägeeinrichtung sind Gegenstand der Unteransprüche.

Eine Kernidee der erfindungsgemäßen Sägeeinrichtung besteht darin, daß eine gemeinsame Verstelleinrichtung vorgesehen ist zum simultanen Verstellen der Schneidrichtungen der Sägeaggregate. Dazu ist es vorgesehen, daß die Verstelleinrichtung einen Schlitten aufweist, welcher in einem Zwischenbereich zwischen den Sägeaggregaten in Querrichtung zur Längsrichtung verstellbar angeordnet ist. Des weiteren besteht eine Kernidee der erfindungsgemäßen Sägeeinrichtung darin, daß ein erstes und ein zweites Verbindungselement vorgesehen sind, deren erste Enden jeweils am Schlitten drehbar oder gelenkig gelagert angeordnet sind und deren zweite Enden jeweils mit einem Sägeaggregat zu deren jeweiligem Drehpunkt beabstandet verbunden sind. Des weiteren sind bei Verstellung des Schlittens in Querrichtung die Sägeaggregate durch Ankopplung über die Verbindungselemente um die Drehpunkte in ihren Schneidrichtungen simultan und kontinuierlich verstellbar.

Durch das Vorsehen einer gemeinsamen Verstelleinrichtung für das Paar von Sägeaggregaten wird eine erhebliche Verringerung des mechanischen Aufwandes erreicht, insbesondere im Hinblick auf die Vielzahl der bei herkömmlichen Sägeeinrichtungen notwendigen mechanischen Einzelteile, welche in bekannter Weise einem starken Verschleiß unterworfen sind.

Durch die Ankopplung der in der Bearbeitungsvorrichtung zueinander beabstandet angeordneten Sägeaggregate an einen Schlitten mittels der erfindungsgemäß vorgesehenen Verbindungselemente ist es möglich, die Schneidrichtungen und damit die Schnittebenen der einzelnen Sägeaggregate miteinander gekoppelt und somit simultan zu verstellen. Dabei sind die Verbindungselemente mit ihrem jeweiligen ersten Ende am Schlitten in drehbarer oder gelenkig gelagerter Weise angebracht. Der Schlitten selbst ist in einem Zwischenbereich zwischen den beabstandet angeordneten Sägeaggregaten in einer Querrichtung zur Längsrichtung bewegbar oder verstellbar. Mit ihren jeweiligen zweiten Enden sind die Verbindungselemente jeweils mit einem Sägeaggregat verbunden, und zwar in räumlichem Abstand zum Drehpunkt oder Schwenkpunkt, um welchen die Sägeaggregate zumindest teilweise verschwenkt werden, um die Schneidrichtungen oder Schnittebenen einzustellen. Es kann sich dabei aber auch um eine jeweilige Drehachse handeln, wenn eine Verschwenkung allein in einer Ebene bei Einstellung der Schnittebenen durchgeführt wird.

Durch die Ankopplung der Sägeaggregate über Verbindungselement an den Schlitten, wird die Bewegung des Schlittens beim Verstellen in Querrichtung zur Längsrichtung in eine Verschwenkrichtung der Sägeaggregate oder zumindest der entsprechenden Sägeblätter um die dafür vorgesehenen Drehpunkte oder Drehachsen zur Einstellung der Schneidrichtungen oder Schnittebenen bewirkt. Dies geschieht für beide Sägeaggregate simultan und erstmalig auch in kontinuierlicher Art und Weise, so daß zwischen einem maximalen und einem minimalen Schnittwinkel beliebige Schneidrichtungen oder Schnittebenen frei wählbar und einstellbar sind.

Aufgrund der Ausgestaltung der erfindungsgemäßen Sägeeinrichtung entfallen eine Vielzahl von mechanischen Teilen, insbesondere die bei herkömmlichen Sägeeinrichtungen vorgesehenen mechanischen Anschläge zur Definition der diskreten Sägestellungen bzw. die entsprechenden Mehrstellungszylinder.
Die erfindungsgemäße Sägeeinrichtung ist somit verschleißärmer und gleichwohl sehr viel flexibler in ansonsten bekannten Bearbeitungsvorrichtungen für Stangenprofile oder Werkstücke einsetzbar.

In einem vorteilhaften Ausführungsbeispiel der erfindungsgemäßen Sägeeinrichtung sind die Verbindungselemente starr mit den Sägeaggregaten verbunden. Insbesondere ist die Verbindung der Verbindungselemente mit den Sägeaggregaten drehtest ausgebildet.
Durch diese Maßnahme ergibt sich eine besonders direkte Ankopplung der Bewegung des Schlittens an die Verschwenkbewegung der Sägeaggregate. Dabei wirkt aufgrund der Beabstandung des Ankopplungspunkts der Verbindungselemente am Sägeaggregat vom Drehpunkt des Sägeaggregates zur Einstellung der Schneidrichtung dieser Abstand als eine Art Hebelarm, so daß durch Wahl eines entsprechenden Abstandes des Verbindungspunkts vom Drehpunkt der Sägeaggregate auch ohne großen Kraftaufwand selbst sehr schwere Sägeaggregate mit entsprechenden Antriebsmechanismen auf leichte Art und Weise verschwenkt werden können.

In einem weiteren bevorzugten Ausführungsbeispiel der erfindungsgemäßen Sägeeinrichtung sind die Verbindungselemente an den Sägeaggregaten um Drehpunkte drehbar oder gelenkig gelagert, welche ihrerseits von den Drehpunkten oder Drehachsen der Sägeaggregate zur Einstellung der Schneidrichtung beabstandet angeordnet sind.
Durch diese gelenkige Lagerung und die Beabstandung der Drehpunkte zueinander ergibt sich eine Art Gestängeübersetzung der Schlittenbewegung in eine Gelenkbewegung, so daß z.B. auch bei kurzen Verstellwegen des Schlittens bereits eine merkliche Verschwenkung der Sägeaggregate erreicht werden kann. Durch eine entsprechende Wahl der Anlenkpunkte der Verbindungselemente an den Sägeaggregaten kann auch erreicht werden, daß bei einem großen Verstellweg des Schlittens eine nur mäßige oder kleine Verschwenkung der Sägeaggregate bewirkt wird. Letztere Maßnahme führt dazu, daß man ein besonders genaues Einstellen der Schneidrichtungen und der Schnittebenen der Sägeaggregate erzielt.

Besonders einfach gestalten sich aber die Verbindungselemente, wenn diese starr, z.B. in Form einer Stange, ausgebildet sind.

Um aber die mechanische Belastung auf die Verbindungspunkte der Verbindungselemente an den Sägeaggregaten, der Anlenkpunkte der Verbindungselemente am Schlitten sowie auf die Verbindungselemente als solche besonders gering zu halten, können die Verbindungselemente entsprechend der Position des Schlittens in Querrichtung in ihrer Länge veränderbar sein. Dies kann z.B. durch teleskopierbare Verbindungselemente oder durch Verbindungselemente in Form eines sogenannten Scherengitters oder dergleichen bewerkstelligt werden.

In einem weiteren bevorzugten Ausführungsbeispiel der erfindungsgemäßen Sägeeinrichtung ist es vorgesehen, daß die Verstelleinrichtung ein Laufelement aufweist, mit welchem der Schlitten im Betrieb der Bearbeitungsvorrichtung in Eingriff steht und auf welchem der Schlitten in Querrichtung im Zwischenbereich zwischen den Sägeaggregaten horizontal und insbesondere stufenlos vor und zurück bewegbar und führbar ist.
Durch dieses Laufelemente wird der verstellbare Schlitten auf seinem Verstellweg geführt und gehaltert, so daß z.B. Bewegungstoleranzen quer zur Verstellrichtung des Schlittens, also insbesondere in Längsrichtung des Werkstücks, und somit mechanische Belastungen der Verbindungselemente zu den Sägeaggregaten hin minimiert werden. Ferner ergibt sich durch das Vorsehen eines derartigen Laufelements eine reproduzierbare Verstellbewegung des Schlittens, d.h. die Verstellbewegung und mithin die Einstellung der Schneidrichtungen und der Schnittebenen der Sägeaggregate lassen sich eichen und in reproduzierbarer Art und Weise und mit hoher Präzision durchführen.

Bevorzugt wird dabei ein Laufelement, welches als Schiene, als Spindel, als Gewinde- oder Zahnstange oder dergleichen ausgebildet ist.
Das Vorsehen eines derartigen, insbesondere starren, Laufelements gewährleistet die Reproduzierbarkeit und Präzision des Verstellens des Schlittens und somit des Einstellens der Schnittebenen in besonderer Weise.

Es ist des weiteren vorgesehen, daß eine gesteuert betätigbare Bewegungseinrichtung ausgebildet ist, mit welcher der Schlitten auf dem Laufelement bewegbar oder verfahrbar ist.

Obwohl also durchaus auch eine manuelle Verstellung und Bewegung des Schlittens auf dem Laufelement denkbar erscheint, ist aber gerade im Hinblick auf eine gewünschte Verringerung der Maschinentaktzeiten der Bearbeitungsvorrichtung für Werkstücke die Bewerkstelligung der Verstellung und Bewegung des Schlittens mittels einer gesteuert betätigbaren Bewegungseinrichtung vorzuziehen. Dadurch entfallen die manuellen Tätigkeiten innewohnenden Ungenauigkeiten, insbesondere beim länger andauernden Einsatz.

Zur weiteren Steigerung der Produktivität im Sinne einer Erniedrigung der Maschinentaktzeiten ist bei der erfindungsgemäßen Sägeeinrichtung eine Steuereinrichtung vorgesehen, durch welche zumindest der Antrieb der Bewegungseinrichtung und somit die Verstellung des Schlittens und folglich der Schneidrichtungen oder Schnittebenen der Sägeaggregate steuerbar ist.

Durch das Vorsehen einer derartigen Steuereinrichtung ergibt sich die Möglichkeit der Produktivitätssteigerung der Bearbeitungsvorrichtung durch entsprechende Automatisierung und Personalreduktion.

Hierbei ist es oft notwendig, daß die den Prozeß steuernde Steuereinrichtung über entsprechende Prozeßparameter und entsprechende Meßsignale die Verstellung des Schlittens und somit die Einstellung der Schnittebenen der Sägeaggregate dem jeweiligen Produktionsprozeß optimal anpaßt. Dazu ist es vorgesehen, Sensoreinrichtungen auszubilden, durch welche zumindest Positonssignale des Schlittens und/oder der Schneidrichtungen der Sägeaagregate erzeugbar und an die Steuereinrichtung übertragbar sind. Aufgrund der zugeführten Signale, die den aktuellen Zustand der Bearbeitungsvorrichtung in der Steuereinrichtung repräsentieren, kann der weitere Verfahrensablauf und die weitere Bearbeitung der zu bearbeitenden Werkstücke optimal geplant und gesteuert werden.

Gemäß eines weiteren Ausführungsbeispieles der erfindungsgemäßen Sägeeinrichtung ist für jedes Sägeaggregat eine Null-Position des Schlittens auf dem Laufelement vorgesehen. Durch das Einnehmen der Null-Position ist das jeweilige Sägeaggregat in eine Schneidrichtung von 90° gegenüber der Längsrichtung verstellbar.
Dabei wird also jedem Sägeaggregat eine bestimmte Position des Schlittens in Querrichtung zur Längsrichtung zugeordnet. Wird für ein bestimmtes Sägeaggregat nun ein bestimmter Schnittwinkel notwendig, so kann zunächst die für das Sägeaggregat maßgebliche Null-Position angefahren werden, um dann von dieser Null-Position ausgehend den tatsächlich für die Gehrung erforderlichen Schnittwinkel für das Sägeaggregat einzustellen.

Vorzugsweise werden die Null-Positionen für die Sägeaggregate durch Ortspositionen des Schlittens auf dem Laufelement definiert, und die Einstellung dieser Null-Positionen wird entsprechend mittels der Steuereinrichtung und über die Sensoreinrichtungen überwacht.

In einem weiteren vorteilhaften Ausführungsbeispiel der erfindungsgemäßen Sägeeinrichtung sind die Null-Positionen der beiden Sägeaggregate im wesentlichen gleich oder identisch.
Dies hat den Vorteil, daß dann die Sägeaggregate simultan auf identische Schneidrichtungen oder Schnittebenen eingestellt werden können, so daß sich in Längsrichtung des Werkstücks gegenüberstehende Gehrungsschnitte auch simultan ausgeführt werden können. Diese Vorgehensweise vermeidet im Betrieb die Notwendigkeit der Neupositionierung des Werkstücks auf dem Spanntisch zur aufeinanderfolgenden Anbringung der Gehrungsschnitte.

Gemäß einer bevorzugten Ausführungsform der erfindungsgemäßen Sägevorrichtung ist es vorgesehen, daß der Schlitten in etwa in der Mitte zwischen den beiden Sägeaggregaten angeordnet ist, daß der Schlitten in etwa senkrecht zur Längsrichtung oder senkrecht zur Verbindungslinie der beabstandet angeordneten Sägeaggregate verstellbar oder bewegbar ist und daß darüber hinaus die Anordnung der Sägeaggregate des Schlittens und der Verbindungselemente an den Sägeaggregaten einerseits und am Schlitten andererseits in etwa spiegelsymmetrisch zu einer Ebene senkrecht zur Verbindungslinie der Sägeaggregate an einem Ort zwischen den Sägeaggregaten ausgebildet ist.

Nachfolgend wird die Erfindung anhand einer schematischen Zeichnung auf der Grundlage eines vorteilhaften Ausführungsbeispiels näher erläutert. In dieser zeigt
- Fig. 1: eine schematische Draufsicht auf ein Ausführungbeispiel der erfindungsgemäßen Sägeeinrichtung in einer Bearbeitungsvorrichtung für eine erste Einstellung der Schneidrichtungen der Sägeaggregate und
- Fig. 2: eine Draufsicht auf das Ausführungsbeispiel der Figur 1 für eine zweite Einstellung der Schneidrichtungen der Sägeaggregate.

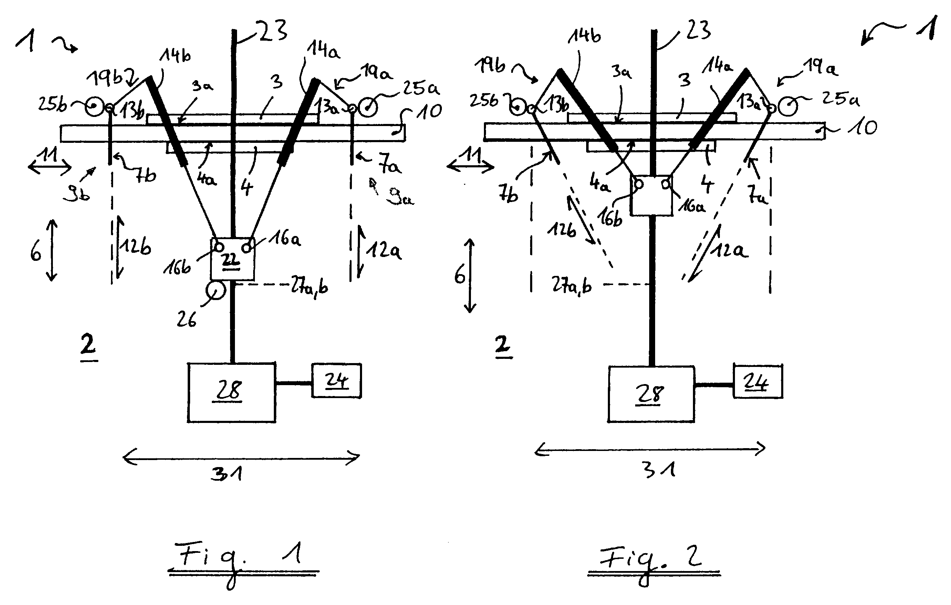

Die Figur 1 zeigt in schematischer Draufsicht ein Ausführungsbeispiel der erfindungsgemäßen Sägeeinrichtung in einer Bearbeitungsvorrichtung 1 für in etwa linear langgestreckte Profilleisten oder Werkstücke 10.

In dieser Bearbeitungsvorrichtung 1 ist das langgestreckte Werkstück 10 zwischen einer Anlageeinrichtung 3 mit Anlagekante 3a und dazu parallel ausgebildeter Spanneinrichtung 4 mit Spannkante 4a auf einem Spanntisch 2 eingespannt und gehaltert.

Die erfindungsgemäße Sägeeinrichtung weist zwei Sägeaggregate 9a und 9b auf, welche um Drehpunkte 13a und 13b herum zum Einstellen der Schneidrichtung 12a und 12b verschwenkbar sind.
In der Anordnung der Figur 1 sind die Sägeblätter 7a und 7b der Sägeaggregate 9a und 9b so ausgerichtet, daß ihre Schneidrichtungen 12a und 12b oder die Richtungen ihrer Schnittebenen in Querrichtung 6 in etwa senkrecht zur linearen Ausdehnung der Anlagekante 3a und der Spannkante 4a und somit auch senkrecht zur linearen Ausdehung in Längsrichtung 11 des gespannten und gehalterten Werkstücks 10 verlaufen.

Die Sägeaggregate 9a und 9b weisen ferner Halteelemente 19a und 19b auf, an denen die Verbindungselemente 14a und 14b zum Schwenkschlitten 22 hin angeordnet sind, in diesem Fall starr und drehfest. Die Verbindungselemente 14a und 14b sind in dem Ausführungsbeispiel der Figur 1 als Teleskopstangen vorgesehen, wobei die zu den Haltelementen 19a und 19b direkt benachbarten Abschnitte der Verbindungselemente 14a und 14b zur Aufnahme der jenseitigen Abschnitte der Verbindungselemente 14a und 14b rohrartig und verdickt ausgebildet sind. Die jeweils anderen Enden der Verbindungselemente 14a und 14b sind mit dem Schlitten 22 verbunden und dort um Drehpunkte 16a und 16b herum drehbar oder gelenkig gelagert.

Der Schlitten 22 selbst greift mit einem Laufelement 23, hier in Form einer Spindel oder einer Gewindestange, ein. Auf dieser Gewindestange oder der Spindel 23 sind Null-Positionen 27a und 27b vorgesehen und/oder markiert, wobei beim Einnehmen dieser Null-Positionen 27a und 27b durch den Schlitten 22 die Stellung der Verbindungselemente 14a und 14b für die Sägeblätte 7a und 7b der Sägeaggregate 9a und 9b entsprechende Schneidrichtungen oder Schnittwinkel 12a und 12b, hier von 90° gegenüber der Werkstücklängsrichtung 11, erzwingt.

Über eine mittels einer Steuereinrichtung 24 gesteuert betätigbare Bewegungseinrichtung 28 wird das hier als Spindel oder Gewindestange ausgebildete Laufelement 23 in Rotation versetzt, wobei durch Eingreifen eines entsprechenden und kooperierenden Elements des Schlittens 22 dieser dann entlang der Querrichtung 6 zur Längsrichtung 11 im Zwischenbereich 31 zwischen den Sägeaggregaten 9a und 9b horizontal bewegbar und verstellbar ist. Die Sensoren 25a und 25b liefern dabei Stellungssignale oder Positionssignale an die Steuereinrichtung 24, und zwar im Hinblick auf die eingestellte Schneidrichtung 12a und 12b. Der am Schlitten 22 ausgebildete Stellungssensor 26 gibt die für dessen Einstellung notwendige Positionsinformation, d.h. also die Stellung des Schlittens 22 auf dem Laufelement 23, ebenfalls an die Steuereinrichtung 24 ab.

In einer alternativen Ausführungsform könnte auch vorgesehen sein, daß auf die Sensoren 25a und 25b verzichtet wird und die Stellungssignale oder Positionssignale von einem als Gewindespindel ausgebildeten Laufelement 23 abgegriffen werden. In diesem Falle würden die Umdrehungen des Laufelementes 23 gezählt, und es würde die Anzahl der Spindelumdrehungen zur Bestimmung der Stellung oder Position des Schlittens 22 ausgewertet.

Die Figur 2 zeigt das Ausführungsbeispiel der erfindungsgemäßen Sägeeinrichtung aus Fig. 1, wobei aber hier der Schlitten mittels der Antriebseinrichtung 28 weiter nach vorn, also in den Zwischenbereich 31 zwischen den Sägeaggregaten 9a und 9b hinein, bewegt oder gefahren ist.

Durch dieses Verfahren des Schlittens 22 auf dem Laufelement 23 haben sich die entsprechenden Winkel der teleskopartigen Verbindungselemente 14a und 14b in bezug auf den Schlitten 22 geändert, und die dem Schlitten 22 benachbarten Abschnitte der Verbindungselemente 14a und 14b sind in die jeweils jenseitigen erweiterten und rohrartigen Abschnitte der Verbindungselemente 14a und 14b hineingeschoben.

Insgesamt sind gegenüber der Anordnung der Figur 1 die Schneidrichtungen 12a und 12b der Sägeblätter 7a und 7b der Sägeaggregate 9a und 9b hinsichtlich der Längsrichtung 11 des Werkstücks 10 verkleinert, indem die Sägeblätter 7a und 7b simultan durch die Verstellbewegung des Schlittens 22 auf dem Laufelement 23 gegeneinander verschwenkt wurden.

Aufgrund der Symmetrie der Anordnung hinsichtlich einer Ebene senkrecht zur Längsrichtung 11 an der Position des Laufelements 23 wird bei dem Ausführungsbeispiel der Figuren 1 und 2 beim Bewegen des Schlittens 22 ein Verstellen der Sägeblätter 7a und 7b um einen identischen Winkelbetrag gegeneinander erreicht.

Mittels der aus Schlitten 22, Laufelement 23 und Verbindungselement 14a und 14b bestehenden Verstelleinrichtung für den Schlitten 22 wird insgesamt eine Kopplung der Verschiebe- oder Verstellbewegung des Schlittens 22 in eine Schwenkbewegung der Sägeaggregate 9a und 9b und insbesondere der entsprechenden Sägeblätter 7a und 7b simultan und in stufenloser Art und Weise, insbesondere in einem Winkelbereich von 90 bis 15°, erreicht.

Der für die Maßnahmen benötigte Einbauraum ist aufgrund der geringen Anzahl benötigter mechanischer Bauteile besonders gering, so daß beim Bearbeiten der Hohlprofile oder Werkstücke 10 in der Bearbeitungsvorrichtung 1 die entsprechenden Abschnitte oder Abfälle leicht entsorgt werden können.

Die Antriebseinrichtunen oder Bewegungseinrichtungen 28 können als Servomotor, insbesondere mit einem untersetzenden Getriebe, ausgebildet sein. Prinzipiell ist aber jeder kontinuierliche Antriebsmechanismus denkbar.

Im Betrieb der Bearbeitungsvorrichtung 1 können die Sägen einzeln und unabhängig voneinander betrieben werden. Es ist aber auch möglich, insbesondere bei hochpräziser simultaner und kontinuierlicher Einstellung des Schneidwinkels, die Sägeaggregate 9a und 9b so zu positionieren, daß ihr gegenseitiger Abstand in Längsrichtung 11 des Werkstücks 10 bereits den linearen Messungen entspricht, die beim Fertigprodukt, d.h. also beim bearbeiteten Werkstück 10, benötigt werden. Dann können die Sägeaggregate 9a und 9b nach entsprechender Einstellung und auch nur, falls zwei symmetrische Abschnitte im gleichen Winkel benötigt werden, gleichzeitig zum Einsatz kommen.

Bei der Verwendung von Führungsschienen als Laufelemente 23, von Führungswagen als Schlitten 22 und eines entsprechenden Kugelgewindeantriebs ergeben sich eine besonders verschleißarme Wechselwirkung der mechanischen Komponenten und zum anderen eine besonders spielfreie und daher hochpräzise Einstellung des Schlittens 22 auf dem Laufelement 23. Daraus folgt auch eine Erhöhung der Maschinensteifigkeit in sich und eine besonders wartungsarme Positionierung, die eine hohe Schnittqualität gewährleistet. Aufgrund des reduzierten mechanischen Aufwandes und des damit verbundenen geringeren Verschleisses gegenüber herkömmlichen Bearbeitungsvorrichtungen wird eine erhebliche Kostenreduzierung, insbesondere im Material- und Wartungsbereich, erzielt.

## Patentansprüche

1. Sägeeinrichtung zum Ablängen eines in einer Bearbeitungsvorrichtung (1) gehalterten, in einer Längsrichtung (11) langgestreckten Werkstücks (10),
mit mindestens zwei Sägeaggregaten (9a, 9b), welche entlang der Längsrichtung (11) voneinander beabstandet anordenbar und zum Durchsägen des Werkstücks (10) in einer ersten und in einer zweiten Schneidrichtung (12a, 12b) quer zur Längsrichtung (11) ausgebildet sowie zur Einstellung der Schneidrichtungen (12a, 12b) um Drehpunkte (13a, 13b) zumindest teilweise verschwenkbar ausgebildet sind,
dadurch **gekennzeichnet**,
daß eine gemeinsame Verstelleinrichtung (30) vorgesehen ist zum simultanen Verstellen der Schneidrichtungen (12a, 12b) der Sägeaggregate (9a, 9b),
daß die Verstelleinrichtung (30) einen Schlitten (22) aufweist, welcher in einem Zwischenbereich (31) zwischen den Sägeaggregate (9a, 9b) in Querrichtung (6) zur Längsrichtung (11) verstellbar angeordnet ist,
daß ein erstes und ein zeites Verbindungselement (14a, 14b) vorgesehen sind, deren erste Enden (15a, 15b) jeweils am Schlitten (22) drehbar oder gelenkig gelagert angeordnet sind und deren zweite Enden (16a, 16b) jeweils mit einem Sägeaggregat (9a, 9b) zum jeweiligen Drehpunkt (13a, 13b) beabstandet verbunden sind, und
daß bei Verstellung des Schlittens (22) in Querrichtung (6) die Sägeaggregate (9a, 9b) durch Ankopplung über die Verbindungselemente (14a, 14b) und die Drehpunkte (13a, 13b) in ihren Schneidrichtungen (12a, 12b) simultan und kontinuierlich verstellbar sind.

2. Sägeeinrichtung nach Anspruch 1,
dadurch **gekennzeichnet**,
daß die Verbindungselemente (14a, 14b) starr, insbesondere drehfest, mit den Sägeaggregaten (9a, 9b) verbunden sind.

3. Sägeeinrichtung nach einem der vorhergehenden Ansprüche,
dadurch **gekennzeichnet**,
daß die Verbindungsgelemente (14a, 14b) an den Sägeaggregaten (9a, 9b) um Drehpunkte (17a, 17b) drehbar oder gelenkig gelagert angeordnet sind.

4. Sägeeinrichtung nach einem der vorhergehenden Ansprüche,
dadurch **gekennzeichnet**,
daß die Verbindungselemente (14a, 14b) starr, teleskopierbar oder in Form eines Scherengitterelements oder dergleichen ausgebildet sind.

5. Sägeeinrichtung nach einem der vorhergehenden Ansprüche,
dadurch **gekennzeichnet**,
daß die Verstelleinrichtung (30) für den Schlitten (22) ein Laufelement (23) aufweist, mit welchem im Betrieb der Bearbeitungsvorrichtung (1) für Werkstücke (10) der Schlitten (22) in Eingriff bringbar ist und auf welchem der Schlitten (22) in Querrichtung (6) im Zwischenbereich (31) horizontal, insbesondere stufenlos, vor und zurück bewegbar und führbar ist.

6. Sägeeinrichtung nach Anspruch 5,
dadurch **gekennzeichnet**,
daß das Laufelemente (23) als Schiene, Spindel, Gewinde- oder Zahnstange oder dergleichen ausgebildet ist.

7. Sägeeinrichtung nach einem der Ansprüche 5 oder 6,
dadurch **gekennzeichnet**,
daß eine gesteuert betätigbare Bewegungseinrichtung (24) vorgesehen ist, mit welcher der Schlitten (22) auf dem Laufelement (23) bewegbar ist.

8. Sägeeinrichtung nach einem der vorhergehenden Ansprüche,
dadurch **gekennzeichnet**,
daß eine Steuereinrichtung (28) vorgesehen ist, und daß durch die Steuereinrichtung (28) der Antrieb der Bewegungseinrichtung (24) und somit die Verstellung des Schlittens (22) und folglich der Schneidrichtungen (12a, 12b) steuerbar ist.

9. Sägeeinrichtung nach Anspruch 8,
dadurch **gekennzeichnet**,
daß Sensoreinrichtungen (25a, 25b, 26) vorgesehen sind, durch welche Positionssignale zumindest des Schlittens (22) und/oder der Schneidrichtungen (12a, 12b) erzeugbar und an die Steuereinrichtung (28) übertragbar sind.

10. Sägeeinrichtung nach einem der vorhergehenden Ansprüche,
dadurch **gekennzeichnet**,
daß für jedes Sägeaggregat (9a, 9b) eine Null-Position (27a, 27b) des Schlittens (22) vorgesehen ist und
daß durch Einnehmen der Null-Position (27a, 27b) das jeweilige Sägeaggregat (9a, 9b) in eine Schnittrichtung (12a, 12b) von 90° gegenüber der Längsrichtung (11) verstellbar ist.

11. Sägeeinrichtung nach Anspruch 10,
dadurch **gekennzeichnet**,
daß die Null-Position (27a, 27b) im wesentlichen gleich ausgebildet ist.

12. Sägeeinrichtung nach einem der vorhergehenden Ansprüche,
dadurch **gekennzeichnet**,
daß die Anordnung der Sägeaggregate (9a, 9b), des Schlittens (22) und der Verbindungselemente (14a, 14b) bezüglich einer senkrecht zur Verbindungslinie der Sägeaggregate (9a, 9b) ausgebildeten Ebene im Zwischenbereich (31) spiegelsymmetrisch ausgebildet und angeordnet ist.
